# EUROPÄISCHE PATENTANMELDUNG

(11) **EP 3 667 142 A1**
(43) Veröffentlichungstag der Anmeldung: **17.06.2020**
(21) Anmeldenummer: 18211215.1
(22) Anmeldetag: 10.12.2018
(51) Int. Cl.: F16L 5/04, A62C 2/06

(54) **BRANDSCHUTZMANSCHETTENSEGMENT UND BRANDSCHUTZMANSCHETTE**

(71) Anmelder: Hilti Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Ein Brandschutzmanschettensegment (10) für eine Brandschutzmanschette (62) zum Abdichten eines eine Öffnung (58) einer Wand oder Decke durchsetzenden brennbaren Körpers (64) im Brandfall umfasst ein erstes Gehäuseelement (12) und ein zweites Gehäuseelement (14), wobei die Gehäuseelemente (12, 14) eine Begrenzungswand (20, 22) mit einer Anlagefläche (50, 52) und einer der Anlagefläche (50, 52) entgegengesetzten Außenfläche (24, 26) aufweisen, und wobei die beiden Gehäuseelemente (12, 14) fest miteinander verbunden und stufenförmig zueinander angeordnet sind, wobei auf den Anlageflächen (50, 52) ein Intumeszenzmaterial (54, 56) aufgebracht ist. Zur Bildung einer Brandschutzmanschette werden mehrere der Brandschutzmanschettensegmente (10) so zueinander angeordnet und miteinander verbunden, dass das auf der Anlagefläche (50) des ersten Gehäuseelements (12) aufgebrachte Intumeszenzmaterial (54) vom zweiten Gehäuseelement (14') des jeweils benachbarten Brandschutzmanschettensegments (10') ganz oder teilweise verdeckt wird.

## Beschreibung

Die Erfindung betrifft ein Brandschutzmanschettensegment sowie eine aus mehreren Brandschutzmanschettensegmenten zusammengesetzte Brandschutzmanschette zum Abdichten eines eine Öffnung in einer Wand oder Decke durchsetzenden brennbaren Körpers im Brandfall.

Um eine Ausbreitung von Feuer oder Rauch in Gebäuden zu verhindern, müssen Öffnungen in Decken oder Wänden, in denen beispielsweise Rohre oder Kabel geführt werden, im Brandfall verschlossen werden können. Zu diesem Zweck werden verschiedene Brandschutzlösungen eingesetzt, zum Beispiel Bandagen oder Bänder, die in der Öffnung oder als Manschetten vor der Öffnung montiert werden.

Zur Bereitstellung von Brandschutz werden verschiedene Brandschutzmittel verwendet, beispielsweise in Form von Einlagen, die an einem Gehäuse befestigt werden. Insbesondere intumeszierende Materialien eignen sich als Brandschutzmittel. Im Brandfall schäumt das intumeszierende Material durch Wärmeeinwirkung auf und verschließt die Öffnung, wodurch die Ausbreitung von Rauch oder Feuer verhindert oder zumindest verzögert wird.

Brandschutzmanschetten haben den Vorteil, dass sie außerhalb der Öffnung vor der Wand montiert werden und so im Brandfall schneller erhitzt werden können, da das Brandschutzmittel nicht passiv durch die umgebende Wand gekühlt wird.

In der DE 10 2008 031 018 A1 ist eine Brandschutzmanschette gezeigt, welche um eine Rohrleitung herum angebracht und mittels eines endseitigen Verschlussmechanismus verriegelt wird. In einer solchen Anordnung ist jedoch für jeden unterschiedlichen Rohrdurchmesser eine eigene Brandschutzmanschette notwendig, die auf den entsprechenden Rohrdurchmesser abgestimmt ist. Dadurch muss eine Vielzahl von Ausführungen bereitgestellt werden, welche gegebenenfalls auch eigene Werkzeuge für die Montage notwendig machen.

Aus der DE 20 2010 007623 ist eine Brandschutzvorrichtung bekannt, welche aus mehreren Gehäusesegmenten zusammengesetzt ist, wodurch der Durchmesser der fertigen Brandschutzvorrichtung an das jeweilige Rohr angepasst werden kann. Jedoch eignet sich ein solches System nur für kleinere Rohrdurchmesser, da die Größe des einzelnen Gehäusesegments auf den kleinsten zu erwartenden Rohrdurchmesser abgestimmt werden muss. Dadurch ist bei größeren Rohrdurchmessern nicht genügend Brandschutzmaterial vorhanden, um einen Verschluss der gesamten Öffnung sicherzustellen.

Um größere Rohrdurchmesser zu verschließen, ist beispielsweise aus der DE 10 2004 055 928 B4 und der DE 43 26 883 A1 bekannt, zusätzliche mechanische Elemente vorzusehen, die im Brandfall in die Mitte der Öffnung schwenken, um auf diese Weise Brandschutzmaterial innerhalb der Öffnung zu verteilen oder einen mechanischen Verschluss zu erreichen. Solche Systeme sind jedoch sehr kostenintensiv in der Herstellung und eignen sich daher nur für Spezialanwendungen und sehr große Rohrdurchmesser.

Aufgabe der Erfindung ist es daher, eine flexibel anwendbare und gleichzeitig kostengünstige Brandschutzvorrichtung bereitzustellen.

Die Aufgabe wird erfindungsgemäß gelöst durch ein Brandschutzmanschettensegment für eine Brandschutzmanschette zum Abdichten eines eine Öffnung einer Wand oder Decke durchsetzenden brennbaren Körpers im Brandfall, mit einem ersten Gehäuseelement und einem zweiten Gehäuseelement, das fest mit dem ersten Gehäuseelement verbunden ist, wobei die Gehäuseelemente jeweils eine Begrenzungswand mit einer Anlagefläche und einer der Anlagefläche entgegengesetzten Außenfläche aufweisen, wobei die beiden Gehäuseelemente stufenförmig zueinander angeordnet sind, und wobei auf den Anlageflächen ein Intumeszenzmaterial aufgebracht ist.

Durch die Bereitstellung eines solchen Brandschutzmanschettensegments kann eine Brandschutzmanschette aus mehreren dieser Brandschutzmanschettensegmente zusammengesetzt und so auf einen gewünschten Rohrdurchmesser angepasst werden.

Die stufenförmige Anordnung der Gehäuseelemente des Brandschutzmanschettensegments sorgt dafür, dass mehrere der Brandschutzmanschettensegmente in einem variablen Abstand zueinander und gleichzeitig stabil angeordnet werden können. Ferner lassen sich dadurch Anordnungen erzielen, die weniger Intumeszenzmaterial benötigen, da die Menge des Intumeszenzmaterials durch Verschieben der Manschettensegmente in Abhängigkeit vom Rohrdurchmesser variiert werden kann.

Der Aufbau der Brandschutzmanschette aus den einzelnen Brandschutzmanschettensegmenten ermöglicht außerdem eine kostengünstige und einfache Herstellung. Beispielsweise kann unabhängig vom Rohrdurchmesser und der Größe der Brandschutzmanschette jedes Brandschutzmanschettensegment durch Stanzen aus einer Metallplatte unter Verwendung des gleichen Werkzeugs erhalten werden.

Das Intumeszenzmaterial bläht sich im Brandfall auf und sorgt so für den Verschluss der Öffnung, sobald der die Öffnung durchsetzende brennbare Körper zusammenfällt. Das Aufbringen des Intumeszenzmaterials auf den dem brennbaren Körper zugewandten Anlageflächen sorgt dafür, dass es bereits in Richtung der zu verschließenden Öffnung zeigt.

In einer bevorzugten Ausführungsform weist das erste Gehäuseelement eine erste Stirnwand auf, die im Wesentlichen senkrecht, d. h. in einem Winkel von etwa 90° ± 15°, zur Begrenzungswand angeordnet sein kann und das auf der Anlagefläche aufgebrachte Intumeszenzmaterial begrenzt. Vorzugsweise ist die erste Stirnwand über eine erste Sollbiegekante fest, bevorzugt einstückig, mit der Begrenzungswand des zweiten Gehäuseelements verbunden. Auf diese Weise kann sich das zweite Gehäuseelement bevorzugt an der ersten Sollbiegekante unter Krafteinwirkung bewegen. Aufgrund der stufenweisen Anordnung der Gehäuseelemente liegt das zweite Gehäuseelement im Anwendungsfall über dem ersten Gehäuseelement eines benachbarten Brandschutzmanschettensegments. Dadurch kann das vom ersten Gehäuseelement umfasste Intumeszenzmaterial sich im Brandfall aufblähen und auf das zweite Gehäuseelement des benachbarten Brandschutzmanschettensegments einwirken und dieses aktiv in die Mitte der abzudichtenden Öffnung bewegen. Auf diese Weise kann auch eine größere Rohröffnung schneller mit Intumeszenzmaterial verschlossen werden, da dieses durch die Bewegung des zweiten Gehäuseelements in Richtung der Mitte der Rohröffnung transportiert wird.

Durch die einstückige Ausführungsform kann eine stabile Verbindung zwischen dem ersten und dem zweiten Gehäuseelement gewährleistet werden, und es ist eine einfache Herstellung der einzelnen Segmente möglich, beispielsweise mittels Stanzen.

Um eine Möglichkeit zum Befestigen mehrerer Brandschutzmanschettensegmente aneinander bereitzustellen, kann das erste Gehäuseelement an seiner Außenfläche eine Lasche aufweisen.

Des Weiteren kann das erste Gehäuseelement an der der ersten Stirnwand gegenüberliegenden Seite der Begrenzungswand ein Band, vorzugsweise ein Metallband, aufweisen, bevorzugter ein mit der Begrenzungswand einstückig verbundenes Metallband. Das Metallband steht vorzugsweise in Längsrichtung der Begrenzungswand vor und kann in die Lasche des ersten Gehäuseelements eines benachbarten Brandschutzmanschettensegments geführt und an diesem befestigt werden. Dadurch wird eine einfache Möglichkeit zum Verbinden mehrerer Brandschutzmanschettensegmente zu einer Brandschutzmanschette realisiert.

In einer bevorzugten Ausführungsform weist das Metallband an zumindest einem Rand Ausnehmungen auf oder ist mit Perforationen versehen, an welchen das Metallband umgebogen werden kann. Dadurch wird eine einfache Möglichkeit geschaffen, um das Metallband an der Lasche zu befestigen und in seiner Position zum benachbarten Brandschutzmanschettensegment zu fixieren. Durch Einbringen einer Vielzahl an Perforationen entlang der Erstreckungsrichtung des Metallbands kann der Abstand der miteinander verbundenen Brandschutzmanschettensegmente zueinander gezielt eingestellt werden, da sich das Metallband an jeder dieser Perforationen umbiegen lässt.

In einer weiteren bevorzugten Ausführungsform kann das Metallband auf seiner Oberfläche Unebenheiten aufweisen, bevorzugt Rippen oder andere Rastelemente. Diese Unebenheiten können sich an der Lasche des benachbarten Brandschutzmanschettensegments nach Art eines Kabelbinders verhaken und dadurch eine sichere Verbindung herstellen.

Das erste Gehäuseelement kann ferner eine zweite Stirnwand aufweisen, die ebenfalls im Wesentlichen senkrecht, d. h. in einem Winkel von etwa 90° ± 15°, zur Begrenzungswand angeordnet ist und der ersten Stirnwand gegenüberliegt. Die zweite Stirnwand ist bevorzugt über eine zweite Sollbiegekante fest, bevorzugt einstückig, mit einer ersten Blende verbunden, wobei die erste Blende zumindest teilweise über dem Intumeszenzmaterial auf der Anlagefläche des ersten Gehäuseelements angeordnet ist. Die erste Blende deckt zumindest teilweise das auf der Anlagefläche des ersten Gehäuseelements aufgebrachte Intumeszenzmaterial ab. Somit wird das Intumeszenzmaterial zusätzlich durch die erste Blende mechanisch gesichert, wodurch Materialverlust, beispielsweise durch Alterungsprozesse, verhindert werden kann.

Die zweite Sollbiegekante sorgt zum einen dafür, dass die Blende leicht umgefaltet werden kann, und zum anderen, dass das Intumeszenzmaterial auf der Anlagefläche des ersten Gehäuseelements, welches sich im Brandfall aufbläht, die Blende zur Seite drücken und sich ungehindert in die zu verschließende Öffnung ausbreiten kann. Gleichzeitig kann die erste Blende auf das oberhalb der Blende liegende zweite Gehäuseelement des benachbarten Brandschutzmanschettensegments einwirken und dieses in Richtung der Mitte der Öffnung drücken.

Im Wesentlichen senkrecht, d. h. in einem Winkel von etwa 90° ± 15°, zur Begrenzungswand des ersten Gehäuseelements ist bevorzugt eine Seitenwand angeordnet, die an die erste und wahlweise die zweite Stirnwand angrenzt und die das Intumeszenzmaterial auf der im Anwendungsfall von der Wand oder Decke abgewandten Seite des Gehäuseelements begrenzt.

Um eine Möglichkeit zur Befestigung an der Wand oder Decke zu gewährleisten, kann an der Außenfläche der Begrenzungswand des ersten Gehäuseelements ein Befestigungselement angebracht sein. Bevorzugt weist das Befestigungselement eine Aussparung auf, durch die ein geeignetes Befestigungsmittel geführt werden kann. Das Befestigungselement ist auf der im Anwendungsfall der Wand oder Decke zugewandten Seite des Gehäuseelements angeordnet und steht von der Außenfläche der Begrenzungswand in einer Richtung weg vom brennbaren Körper ab. Das Gehäuseelement kann mit Hilfe des Befestigungselements beispielsweise an der Wand oder Decke verschraubt oder vernietet sein.

In einer bevorzugten Ausführungsform kann das erste Gehäuseelement auf seiner Außenfläche, bevorzugt auf Höhe des Befestigungselementes, einen Vorsprung aufweisen. Auf diese Weise wird es möglich, mehrere Brandschutzmanschettensegmente axial übereinander zu stapeln und so mehrere miteinander verbundene Ringe von Brandschutzmanschetten zu bilden. Dabei kann das Befestigungselement der einzelnen Brandschutzmanschettensegmente so ausgeführt sein, dass die Aussparung auf den Vorsprung des axial benachbarten Brandschutzmanschettensegments aufgesteckt werden kann, und dadurch eine sichere Verbindung zwischen beiden Brandschutzmanschettensegmenten hergestellt wird.

In einer weiteren bevorzugten Ausführungsform kann das zweite Gehäuseelement eine der ersten Sollbiegekante gegenüberliegende dritte Stirnwand aufweisen, die im Wesentlichen senkrecht, d. h. in einem Winkel von etwa 90° ± 15°, zur Begrenzungswand des zweiten Gehäuseelements angeordnet ist und das auf der Anlagefläche des zweiten Gehäuseelements aufgebrachte Intumeszenzmaterial begrenzt. Die dritte Stirnwand ist bevorzugt mit einer zweiten Blende fest, bevorzugt einstückig, verbunden, wobei die zweite Blende zumindest teilweise das Intumeszenzmaterial auf der Anlagefläche des zweiten Gehäuseelements überdeckt, und wobei zwischen der zweiten Blende und der dritten Stirnwand bevorzugt eine dritte Sollbiegekante vorgesehen ist. Auf diese Weise kann, analog zur ersten Blende, dass Intumeszenzmaterial auf der Anlagefläche des zweiten Gehäuseelements mit der zweiten Blende mechanisch gesichert werden. Die dritte Sollbiegekante gewährleistet, dass sich die Blende im Brandfall durch das Aufblähen des Intumeszenzmaterials auf der Anlagefläche des zweiten Gehäuseelements zur Seite, in Richtung der zu verschließenden Öffnung biegt, damit das Intumeszenzmaterial ungehindert die Öffnung verschließen kann. Zusätzlich sorgt die im Brandfall zur Mitte des brennbaren Körpers gebogene Blende für eine mechanische Stabilisierung des aufgeblähten Intumeszenzmaterials. Dadurch wird die Öffnung zum einen sicherer verschlossen, zum anderen kann bei gleichbleibend stabilem Verschluss der Öffnung weniger Intumeszenzmaterial verwendet werden.

Um besonders große Öffnungen im Brandfall sicher zu verschließen, kann auf der zweiten Blende, bevorzugt mindestens auf ihrer der Anlagefläche des zweiten Gehäuseelements zugewandten Seite, ebenfalls ein Intumeszenzmaterial aufgebracht sein. Auf diese Weise wird die zweite Blende nicht nur zur mechanischen Stabilisierung genutzt, sondern trägt selbst zusätzliches Intumeszenzmaterial in die zu verschließende Öffnung ein.

Auch das zweite Gehäuseelement weist bevorzugt eine Seitenwand auf, die im Wesentlichen senkrecht, d. h. in einem Winkel von etwa 90° ± 15°, zur Begrenzungswand des zweiten Gehäuseelements angeordnet ist und die an die dritte Stirnwand angrenzt. Somit wird das Intumeszenzmaterial auf der Anlagefläche des zweiten Gehäuseelements durch die Seitenwand auf der im Anwendungsfall von der Wand oder Decke abgewandten Seite des Gehäuseelements begrenzt.

Das Intumeszenzmaterial kann Blähgraphit umfassen oder aus diesem bestehen. Blähgraphit ist ein kostengünstiges Intumeszenzmaterial und weist zusätzlich besonders günstige Eigenschaften auf. So entwickelt der im Brandfall expandierende Blähgraphit eine hinreichend große Kraft, die eine Bewegung des zweiten Gehäuseelements und/oder der ersten und der zweiten Blende in Richtung der zu verschließenden Öffnung bewirken kann. Außerdem ist expandierter Blähgraphit weitgehend temperaturbeständig und stellt so einen sicheren Verschluss im Brandfall her.

Im Übrigen kann das Intumeszenzmaterial weitere im Stand der Technik bekannte Zusätze umfassen, wie Treibmittel, Säurebildner, Aschebildner und Ablationsmittel.

Die erfindungsgemäßen Brandschutzmanschettensegmente lassen sich einfach unter Bildung einer Brandschutzmanschette zusammenfügen, die um den die Öffnung in der Wand oder Decke durchsetzenden brennbaren Körper herumgelegt werden kann.

Gegenstand der Erfindung ist daher auch eine Brandschutzmanschette, umfassend mehrere der zuvor beschriebenen Brandschutzmanschettensegmente, dadurch gekennzeichnet, dass die Brandschutzmanschettensegmente so zueinander angeordnet sind, dass das auf der Anlagefläche des ersten Gehäuseelements aufgebrachte Intumeszenzmaterial mindestens teilweise vom zweiten Gehäuseelement eines benachbarten Brandschutzmanschettensegments verdeckt wird.

In einer ersten bevorzugten Ausführungsform sind die benachbarten Brandschutzmanschettensegmente abstandsfrei zueinander angeordnet, so dass das zweite Gehäuseelement bündig über dem ersten Gehäuseelement eines benachbarten Brandschutzmanschettensegments zu liegen kommt. Diese Ausführungsform wird durch die stufenförmige Anordnung des ersten und zweiten Gehäuseelements eines jeden Brandschutzmanschettensegments ermöglicht. Da auf diese Weise immer mindestens zwei Schichten des Intumeszenzmaterials übereinanderliegen, können im Brandfall auch große Öffnungen verschlossen werden. Das zweite Gehäuseelement wird dabei in einer solchen Anordnung vorteilhaft vom sich aufblähenden Intumeszenzmaterial des darunterliegenden ersten Gehäuseelements des benachbarten Brandschutzmanschettensegments in Richtung der zu verschließenden Öffnung bewegt.

In einer weiteren Ausführungsform einer Brandschutzmanschette, die mehrere der zuvor beschriebenen Brandschutzmanschettensegmente umfasst, sind die Brandschutzmanschettensegmente in einem Abstand zueinander angeordnet, so dass zumindest ein Teil des auf der Anlagefläche des ersten Gehäuseelements aufgebrachten Intumeszenzmaterials nicht vom zweiten Gehäuseelement des jeweils benachbarten Brandschutzmanschettensegments verdeckt ist. Eine solche gestreckte Anordnung bietet den Vorteil, dass, insbesondere bei kleineren Öffnungen, nicht an jeder Stelle der Brandschutzmanschette zwei oder mehr Lagen des Intumeszenzmaterials übereinanderliegen müssen, während gleichzeitig gewährleistet bleibt, dass an jedem Punkt der Öffnung zumindest eine Schicht des Intumeszenzmaterials in für den Brandschutz ausreichender Menge vorliegt. Dadurch lässt sich eine deutliche Materialeinsparung erzielen.

Da in der beschriebenen gestreckten Anordnung das Intumeszenzmaterial auf der Anlagefläche des ersten Gehäuseelements nur noch auf das Ende des benachbarten zweiten Gehäuseelements einwirkt, ergibt sich ein besonders gutes Hebelverhältnis der Krafteinwirkung auf das zweite Gehäuseelement an der ersten Sollbiegekante. Dadurch wird das zweite Gehäuseelement besonders frühzeitig in Richtung der Mitte der Öffnung bewegt.

Die Erfindung betrifft schließlich die Verwendung einer Brandschutzmanschette gemäß den oben beschriebenen Ausführungsformen zum Abdichten eines eine Öffnung in einer Wand oder Decke durchsetzenden brennbaren Körpers im Brandfall, wobei die Brandschutzmanschette so um den brennbaren Körper angeordnet ist, dass das Intumeszenzmaterial auf den Anlageflächen des ersten und zweiten Gehäuseelements dem Körper zugewandt und die jeweiligen Außenflächen der Begrenzungwände vom brennbaren Körper abgewandt sind, und wobei zumindest abschnittsweise mehrere Lagen von Intumeszenzmaterial hintereinander angeordnet sind.

Weitere Vorteile und Eigenschaften der Erfindung ergeben sich aus der nachfolgenden Beschreibung und den Zeichnungen, auf die Bezug genommen wird. In diesen zeigen:
- Figur 1 ein Gehäuse eines erfindungsgemäßen Brandschutzmanschettensegments in Form eines Stanzteils,
- Figur 2a eine perspektivische Ansicht eines erfindungsgemäßen Brandschutzmanschettensegments,
- Figur 2b eine alternative Ausführungsform des Brandschutzmanschettensegments,
- Figur 3 eine schematische Schnittansicht eines Brandschutzmanschettensegments mit Intumeszenzmaterial,
- Figur 4 eine schematische Schnittansicht von zwei miteinander verbundenen Brandschutzmanschettensegmenten in abstandsfreier Anordnung,
- Figur 5 eine schematische Schnittansicht von zwei mit einander verbundenen Brandschutzmanschettensegmenten in gestreckter Anordnung,
- Figur 6 eine schematische Draufsicht auf eine erfindungsgemäße Brandschutzmanschette, in Richtung auf die zu verschließende Öffnung,
- Figur 7 eine weitere schematische Draufsicht auf eine erfindungsgemäße Brandschutzmanschette, in Richtung auf die zu verschließende Öffnung,
- Figur 8 eine Brandschutzmanschette im Aktivierungsfall, während des Verschließens einer Öffnung,
- Figur 9 eine schematische Darstellung einer alternativen Ausführungsform für ein Brandschutzmanschettensegment, und
- Figur 10 das Brandschutzmanschettensegment aus Figur 10 während der Intumeszenz.

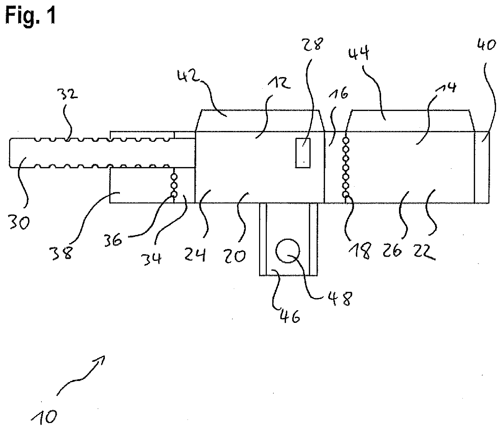

In Figur 1 ist ein Gehäuse für ein erfindungsgemäßes Brandschutzmanschettensegment 10 in Form eines Stanzteils gezeigt, mit einem ersten Gehäuseelement 12 und einem zweiten Gehäuseelement 14, wobei das erste Gehäuseelement 12 und das zweite Gehäuseelement 14 über eine erste Stirnwand 16 des ersten Gehäuseelements 12 an einer ersten Sollbiegekante 18 fest miteinander verbunden sind.

Das erste Gehäuseelement 12 und das zweite Gehäuseelement 14 weisen jeweils eine Begrenzungswand 20 beziehungsweise 22 mit einer Außenfläche 24 beziehungsweise 26beziehungsweiseauf.

Auf der Außenfläche 24 des ersten Gehäuseelements 12 befindet sich eine Lasche 28.

Zusätzlich befindet sich auf einer der ersten Stirnwand 16 gegenüberliegenden Seite des ersten Gehäuseelements 12 ein mit der Begrenzungswand 20 verbundenes Metallband 30, welches in Längsrichtung des ersten Gehäuseelements 12 von diesem absteht.

Das Metallband 30 weist an seinen Rändern Perforationen 32 auf, an welchen das Metallband 30 umgebogen werden kann.

Das erste Gehäuseelement 12 weist zusätzlich auf seiner der ersten Stirnwand 16 gegenüberliegenden Seite eine zweite Stirnwand 34 auf, welche über eine zweite Sollbiegekante 36 mit einer ersten Blende 38 verbunden ist. Gemäß einer alternativen Ausführungsform kann das erste Gehäuseelement 12 auf dieser Seite lediglich das Metallband 30 aufweisen.

Ferner befindet sich an einer der ersten Sollbiegekante 18 gegenüberliegenden Seite des zweiten Gehäuseelements 14 eine dritte Stirnwand 40.

Am ersten Gehäuseelement 12 und am zweiten Gehäuseelement 14 ist des Weiteren eine erste Seitenwand 42 beziehungsweise eine zweite Seitenwand 44 vorgesehen.

Vom ersten Gehäuseelement 12 steht in dessen Querrichtung zusätzlich ein Befestigungselement 46 mit einer Aussparung 48 ab.

Bevorzugt sind alle Komponenten der in Figur 1 dargestellten Ausführungsform einstückig fest miteinander verbunden. So könnte das gesamte Gehäuse beispielsweise aus Stahlblech gestanzt werden. Es ist grundsätzlich jedoch auch denkbar, dass mehrere der Einzelteile lediglich aneinandergeschweißt, gelötet oder mittels Steckverbindungen miteinander verbunden sind.

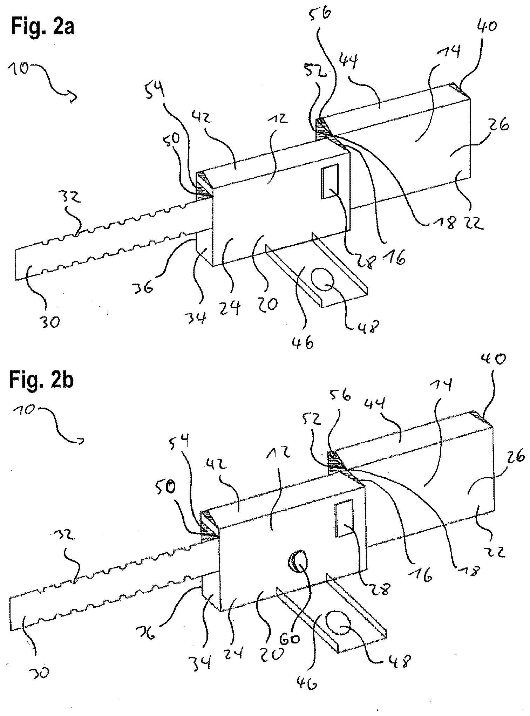

In Figur 2a ist ein Brandschutzmanschettensegment gezeigt, wie es aus einem analog zu Figur 1 gefertigten Stanzteil gefaltet werden kann.

Das erste Gehäuseelement 12 und das zweite Gehäuseelement 14 sind stufenförmig zueinander angeordnet. Die Stufe ist an der ersten Sollbiegekante 18 zwischen dem ersten Gehäuseelement 12 und dem zweiten Gehäuseelement 14 gebildet. Die erste Stirnwand 16 ist im Wesentlichen senkrecht zur Begrenzungswand 20 angeordnet und begrenzt somit eine Anlagefläche 50 am ersten Gehäuseelement 12. Die dritte Stirnwand 40 steht im Wesentlichen senkrecht zur Begrenzungswand 22 und begrenzt die Anlagefläche 52 am zweiten Gehäuseelement 14.

Die Seitenwände 42 und 44 sind ebenfalls so aufgebogen, dass sie im Wesentlichen senkrecht zu den Begrenzungsflächen '20 und 22 stehen und die Anlageflächen 50 und 52 begrenzen.

Auf die Anlageflächen 50 und 52 des ersten Gehäuseelements 12 beziehungsweise des zweiten Gehäuseelements 14 ist jeweils ein Intumeszenzmaterial 54 beziehungsweise 56 aufgebracht. Das Intumeszenzmaterial 54 und 56 kann beispielsweise auf den Anlageflächen 50 und 52 verklebt sein.

Das Intumeszenzmaterial in der dargestellten Ausführungsform umfasst Blähgraphit. Grundsätzlich sind jedoch auch andere Brandschutzmaterialien denkbar, beispielsweise polymergebundene Intumeszenzmassen auf Basis von Melamin, Ammoniumpolyphosphat und Polyolen, wahlweise zusammen mit Blähgraphit und/oder Ablationsmitteln wie Aluminiumtrihydroxid.

Die zweite Stirnwand 34 am ersten Gehäuseelement 12 ist so aufgebogen, dass sie der ersten Stirnwand 16 gegenüberliegt, und dass die erste Blende 38 über dem Intumeszenzmaterial 56 im ersten Gehäuseelement 12 zu liegen kommt.

In Figur 2a ist zu sehen, dass die erste Stirnwand 16, die zweite Stirnwand 34 sowie die dritte Stirnwand 40 so breit ausgeführt sind, dass sie das Intumeszenzmaterial 54 beziehungsweise 56 seitlich abdecken. Auf diese Weise wird ein seitliches Herausfallen des Intumeszenzmaterials 54 beziehungsweise 56 verhindert.

Die zweite Stirnwand 34 weist in der gezeigten Ausführungsform jedoch eine Aussparung auf, die der Breite des Metallbandes 30 entspricht. Dies entsteht dadurch, dass das Gehäuse des Brandschutzmanschettensegments 10 als Stanzteil hergestellt worden ist. Wird das Metallband 30 einzeln gefertigt und anschließend am ersten Gehäuseelement 12 befestigt, beispielsweise verschweißt oder verlötet, kann die zweite Stirnwand 34 das Intumeszenzmaterial 54 auch komplett abdecken.

Das Befestigungselement 46 ist senkrecht zur Außenfläche 24 des ersten Gehäuseelements 12 angeordnet. Auf diese Weise kann das Befestigungselement 46 an einer Wand oder Decke, durch die eine Öffnung 58 verläuft, angebracht, beispielsweise verschraubt werden.

In Figur 2b ist eine alternative Ausführungsform des Brandschutzmanschettensegments 10 aus Figur 2a gezeigt, in welcher das erste Gehäuseelement 12 zusätzlich auf seiner Außenfläche 24 einen Vorsprung 60 aufweist. Dieser ist dabei so angeordnet, dass die Aussparung 48 des Befestigungselements 46 eines zweiten Brandschutzmanschettensegments 10, welches axial über dem ersten Brandschutzmanschettensegment 10 gestapelt ist, am Vorsprung 60 des ersten Brandschutzmanschettensegments 10 verankert werden könnte. Das Befestigungselement 46 des zweiten Brandschutzmanschettensegments würde dann etwa in einer Ebene mit der Begrenzungswand 20 liegen. Auf diese Weise können zwei Brandschutzmanschettensegmente 10, welche axial aufeinander angeordnet werden, mittels des Befestigungselement 46 miteinander verbunden werden.

Das Befestigungselement 46 kann an verschiedenen Positionen relativ zur Lasche 28 am ersten Gehäuseelement 12 vorgesehen sein, wie in Figur 1 und Figur 2b gezeigt. Wenn ein Vorsprung 60 vorgesehen ist, ist das Befestigungselement 46 vorteilhafterweise nicht auf Höhe der Lasche 28 angebracht, damit eine sichere Verbindung zwischen dem Befestigungselement 46 und einem Vorsprung 60 an der Außenfläche 20 des axial unter dem zweiten Brandschutzmanschettensegment 10 angeordneten ersten Gehäuseelements 12 gewährleistet ist.

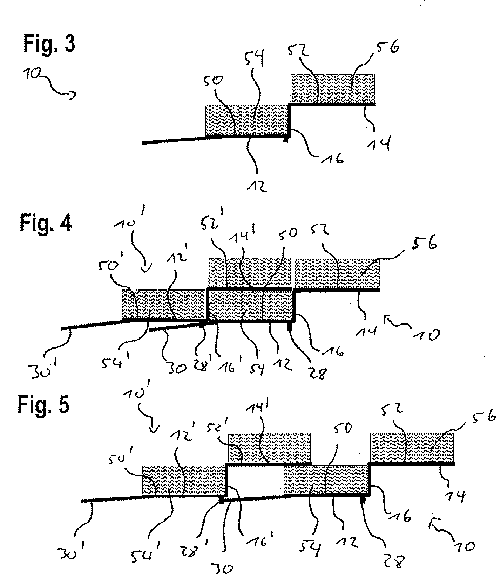

In Figur 3 ist eine schematische Schnittansicht einer Ausführungsform des Brandschutzmanschettensegments 10 dargestellt, in der nur die erste Stirnwand 16 gezeigt ist. Die beiden Gehäuseelemente 12 und 14 sind stufenförmig zueinander angeordnet und weisen jeweils auf ihren Anlageflächen 50 und 52 ein Intumeszenzmaterial 54 beziehungsweise 56 auf.

In Figur 4 sind zwei der in Figur 3 gezeigten Brandschutzmanschettensegmente in einer abstandsfreien Stellung zueinander angeordnet. Dabei greift das Metallband 30 des ersten Brandschutzmanschettensegments 10 in die Lasche 28' des benachbarten Brandschutzmanschettensegments 10' ein und sorgt so für eine sichere Verbindung beider Brandschutzmanschettensegmente 10 und 10'.

Das Metallband 30 ist in der in Figur 4 gezeigten Ausführungsform nicht umgebogen, sondern weist an seiner Oberfläche Unebenheiten (nicht gezeigt) auf, beispielsweise Rippen oder Rastelemente, welche sich in der Lasche 28' verhaken und so eine sichere Verbindung gewährleisten.

In Figur 5 ist eine gestreckte Anordnung zweier Brandschutzmanschettensegmente 10 und 10' gezeigt, bei der die Brandschutzmanschettensegmente 10 und 10' in einem Abstand zueinander angeordnet sind, und bei der das zweite Gehäuseelement 14' des Brandschutzmanschettensegments 10' nur noch teilweise das Intumeszenzmaterial 54 auf dem ersten Gehäuseelement 12 des Brandschutzmanschettensegments 10 verdeckt.

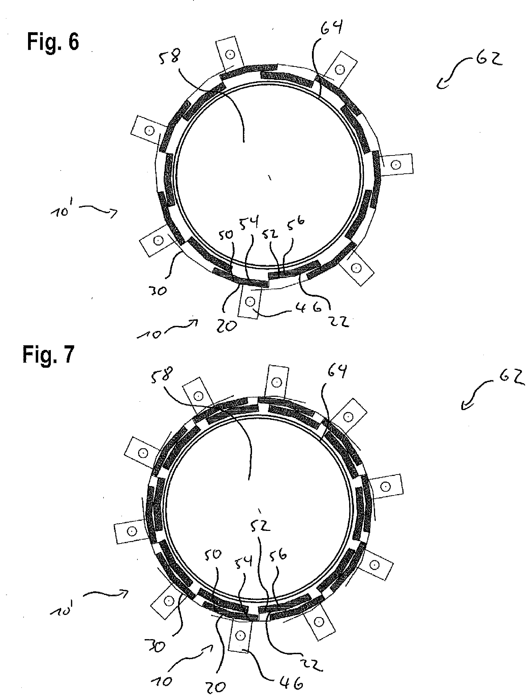

In den Figuren 6 und 7 sind Brandschutzmanschetten 62 gezeigt, welche vor einer Wand (nicht gezeigt) um eine Öffnung 58 eines brennbaren Körpers 64 angeordnet sind und mehrere miteinander verbundene Brandschutzmanschettensegmente 10 umfassen. Der brennbare Körper 64 ist vorzugsweise ein Rohr, insbesondere ein Kunststoffrohr, oder ein Kabelkanal.

Zur Montage werden mehrere der Brandschutzmanschettensegmente 10 mittels der Metallbänder 30 fest miteinander verbunden, wobei die verwendete Anzahl der Brandschutzmanschettensegmente 10 dem Durchmesser des brennbaren Körpers 64 angepasst wird. Anschließend wird die dadurch gebildete Kette an Brandschutzmanschettensegmenten 10 um den brennbaren Körper 64 herumgelegt und die endständigen Brandschutzmanschettensegmente 10 mittels des Metallbandes 30 verbunden.

Die Befestigungselemente 46 stehen im Wesentlichen senkrecht von der Begrenzungswand 20 ab und werden an der (nicht dargestellten) Wand angelegt und anschließend fest mit der Wand verbunden, beispielsweise verschraubt. Auf diese Weise wird die Brandschutzmanschette 62 sicher an der Wand um den brennbaren Körper 64 herum fixiert.

In der Ausgangsstellung sind die stufenförmigen Brandschutzmanschettensegmente 10 so um den brennbaren Körper 64 angeordnet, dass die Anlageflächen 50 und 52, und damit auch das Intumeszenzmaterial 54 und 56, in Richtung des brennbaren Körpers 64 zeigen. Die Außenflächen 24 und 26 der Begrenzungswände 20 und 22 zeigen entsprechend vom brennbaren Körper 64 weg. Gleichzeitig sind die Seitenwände 42 und 44 auf der von der Wand abgewandten Seite der Brandschutzmanschette angeordnet. Dadurch begrenzen die Seitenwände 42, 44 das Intumeszenzmaterial 54 und 56 und verhindern dadurch, dass dieses aus der montierten Brandschutzmanschette 62 herausfallen kann und/oder sich im Brandfall von der zu verschließenden Öffnung weg aufbläht.

Die in Figur 6 und Figur 7 gezeigten Ausführungsformen unterscheiden sich darin, wie groß der Abstand zwischen aufeinanderfolgenden Brandschutzmanschettensegmenten 10 und 10' gewählt ist.

Die Größe des Abstands zwischen mehreren Brandschutzmanschettensegmenten 10 und 10' hängt von der Größe der zu verschließenden Öffnung 58 ab. In Tabelle 1 sind Beispiele dafür angegeben, wieviel Intumeszenzmaterial bei gegebenem Durchmesser des brennbaren Körpers durch die Auswahl der Anzahl von Brandschutzsegmenten pro Manschette eingespart werden kann. Dafür wurden als brennbare Körper 64 verschiedene Rohre mit unterschiedlichen Durchmessern getestet.

**Tabelle 1: Benötigte Anzahl an Brandschutzsegmenten für verschiedene Rohrdurchmesser.**

| Rohrdurchmesser [mm] | Anzahl Segmente (abstandsfreie Anordnung) | Anzahl Segmente (gestreckte Anordnung) | Einsparung Masse Intumeszenzmaterial [%] |
|---|---|---|---|
| 180 | 6 | 4 | 33,3 |
| 200 | 6 | 5 | 16,7 |
| 225 | 7 | 6 | 14,3 |
| 250 | 8 | 7 | 12,5 |
| 300 | 9 | 8 | 11,1 |
| 315 | 10 | 9 | 10,0 |
| 350 | 11 | 10 | 9,1 |
| 400 | 13 | 12 | 7,7 |

Es zeigt sich, dass gerade bei kleinen Rohrdurchmessern eine deutliche Einsparung an Intumeszenzmaterial erzielt werden kann, ohne den Brandschutz zu beeinträchtigen. Für sehr große Rohrdurchmesser empfiehlt es sich, die abstandsfreie Anordnung zu wählen, um sicherzustellen, dass ausreichend Intumeszenzmaterial zum vollständigen Verschließen der Öffnung 58 vorhanden ist.

Im Brandfall schmilzt der brennbare Körper 64 weg oder verbrennt, so dass die Öffnung 58 freiliegt und verschlossen werden muss, um eine Ausbreitung des Brandes und von Rauch in benachbarte Räume zu verhindern. Durch den Brand wird das Intumeszenzmaterial 54 und 56 erhitzt, so dass dieses schon bei einem Erweichen des brennbaren Körpers 64 damit beginnt, sich aufzublähen. Das Intumeszenzmaterial 54, welches auf der Anlagefläche 50 des ersten Gehäuseelements 12 aufgebracht ist, wirkt dadurch mit einer Kraft auf das zweite Gehäuseelement 14' des benachbarten Brandschutzmanschettensegments 10' ein, wodurch sich dieses entlang der ersten Sollbiegekante 18 in Richtung der Öffnung 58 bewegt. Gleichzeitig bläht sich das auf der Anlagefläche 52 aufgebrachte Intumeszenzmaterial 56 auf.

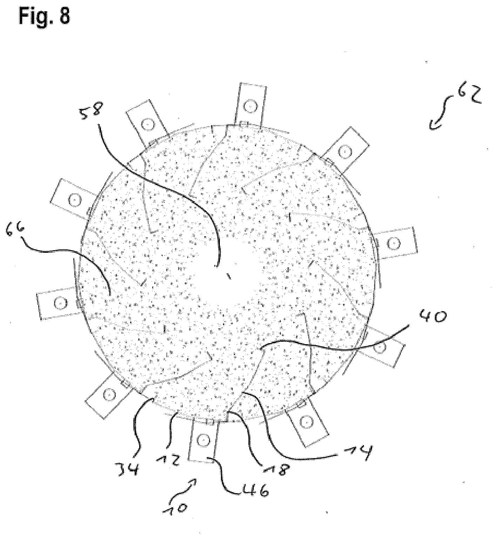

In Figur 8 ist die in Figur 7 gezeigte Anordnung während der Intumeszenz gezeigt. Die zweiten Gehäuseelemente 14 haben sich entlang der ersten Sollbiegekante 18 in Richtung der Mitte der Öffnung 58 bewegt. Dadurch sind sie irisförmig innerhalb der Öffnung 58 und des aufgeblähten Intumeszenzmaterials 66 angeordnet. Das aufgeblähte Intumeszenzmaterial 66 verschließt letztlich die Öffnung 58 vollständig.

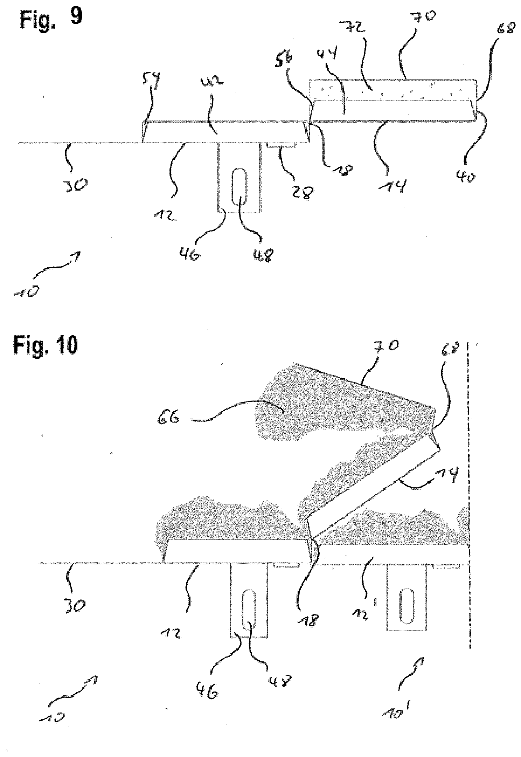

In Figur 9 ist eine alternative Ausführungsform des Brandschutzmanschettensegments 10 gezeigt. In dieser ist die dritte Stirnwand 40 des zweiten Gehäuseelements 14 über eine dritte Sollbiegekante 68 mit einer zweiten Blende 70 fest verbunden. Auf der zur Anlagefläche 52 des zweiten Gehäuseelements 14 weisenden Seite ist auf der zweiten Blende 70 zusätzliches Intumeszenzmaterial 72 aufgebracht. Auch weist in Figur 10 die Aussparung 48 eine nicht kreisrunde Form auf, wie in den bisher gezeigten Ausführungsformen.

In Figur 10 sind zwei miteinander verbundene Brandschutzmanschettensegmente 10 und 10' gemäß der Ausführungsform von Figur 10 während der Intumeszenz gezeigt. Im Brandfall wird das zweite Gehäuseelement 14 wie bei den zuvor beschriebenen Ausführungsformen entlang der ersten Sollbiegekante 18 in Richtung der Mitte der Öffnung 58 bewegt. die zweite Blende 70 wird durch das sich aufblähende Intumeszenzmaterial 56 auf der Anlagefläche des zweiten Gehäuseelements 14 weggedrückt und klappt entlang der dritten Sollbiegekante 68, gegenläufig zur Bewegung des zweiten Gehäuseelements 14, auf. Im Brandfall kann somit zusätzliches Intumeszenzmaterials 72 in die Mitte der zu verschließenden Öffnung 58 transportiert werden.

Eine erfindungsgemäße Brandschutzmanschette aus acht miteinander verbundenen Brandschutzmanschettensegmenten wurde in einem Brandtest gemäß dem Teststandard EN1366-3_2009 getestet. Dazu wurde die Brandschutzmanschette an einem Polypropylen-Rohr (Aquaterm Blue Pipe SDR 17,6, Durchmesser 250mm, Dicke 14,2 mm) befestigt, das durch eine 100 mm Porenbetonwand ging. Die Brandschutzmanschette enthielten insgesamt 1.28 kg Intumeszenzmaterial. Im Brandtest wurde ein F&T-Rating von 120 Minuten erreicht. Das F-Rating gibt die minimale Zeitspanne an, bei der aufgezeigt werden konnte, dass eine Feuerausbreitung verhindert wurde. Das T-Rating gibt die Zeitspanne an, innerhalb der die Temperatur eines Messpunktes auf einer Installation auf der feuerabgewandeten Seite einer Wand- oder Deckendurchführung um 180K, gegenüber der Anfangstemperatur ansteigt. Die Temperatur von 180K über Raum- bzw. Umgebungstemperatur wird auch als kritische Temperatur bezeichnet. Damit wird sichergestellt, dass die Temperatur auf der feuerabgewandten Wandseite den Flammpunkt keines der auf dieser Seite der Wand befindlichen Materialien erreicht, so dass eine Selbstentzündung aufgrund erhöhter Temperatur verhindert wird.

## Patentansprüche

1. Brandschutzmanschettensegment (10) für eine Brandschutzmanschette (62) zum Abdichten eines eine Öffnung (58) einer Wand oder Decke durchsetzenden brennbaren Körpers (64) im Brandfall, mit einem ersten Gehäuseelement (12) und einem zweiten Gehäuseelement (14), das fest mit dem ersten Gehäuseelement (12) verbunden ist,
wobei die Gehäuseelemente (12, 14) jeweils eine Begrenzungswand (20, 22) mit einer Anlagefläche (50, 52) und einer der Anlagefläche entgegengesetzten Außenfläche (24, 26) aufweisen,
wobei die beiden Gehäuseelemente (12, 14) stufenförmig zueinander angeordnet sind, und wobei
auf den Anlageflächen (50, 52) ein Intumeszenzmaterial (54, 56) aufgebracht ist.

2. Brandschutzmanschettensegment nach Anspruch 1, **dadurch gekennzeichnet, dass** das erste Gehäuseelement (12) eine erste Stirnwand (16) aufweist, welche über eine erste Sollbiegekante (18) mit dem zweiten Gehäuseelement (14) fest, bevorzugt einstückig, verbunden ist.

3. Brandschutzmanschettensegment nach einem der vorherigen Ansprüche, **dadurch gekennzeichnet, dass** das erste Gehäuseelement (12) auf seiner Außenfläche (24) eine Lasche (28) aufweist.

4. Brandschutzmanschettensegment nach einem der vorherigen Ansprüche, **dadurch gekennzeichnet, dass** das erste Gehäuseelement (12) an der der ersten Stirnwand (16) gegenüberliegenden Seite ein Metallband (30) aufweist, bevorzugt ein mit der Begrenzungswand einstückig verbundenes Metallband (30).

5. Brandschutzmanschettensegment nach Anspruch 3, **dadurch gekennzeichnet, dass** das Metallband (30) an zumindest einem Rand Ausnehmungen aufweist, bevorzugt Perforationen (32), an welchen das Metallband (30) umgebogen werden kann.

6. Brandschutzmanschettensegment nach Anspruch 4 oder 5, **dadurch gekennzeichnet, dass** das Metallband (30) auf seiner Oberfläche Unebenheiten aufweist, bevorzugt Rippen oder Rastelemente.

7. Brandschutzmanschettensegment nach einem der vorhergehenden Ansprüche, **dadurch gekennzeichnet, dass** das erste Gehäuseelement (12) eine zweite Stirnwand (34) aufweist, die über eine zweite Sollbiegekante (36) mit einer ersten Blende (38) verbunden ist, wobei die erste Blende (38) zumindest teilweise über der Anlagefläche (50) des ersten Gehäuseelements (12) angeordnet ist.

8. Brandschutzmanschettensegment nach einem der vorhergehenden Ansprüche, **dadurch gekennzeichnet, dass** an der Außenfläche (24) des ersten Gehäuseelements (12) ein Befestigungselement (46), bevorzugt mit einer Aussparung (48), angebracht ist.

9. Brandschutzmanschettensegment nach Anspruch 8, **dadurch gekennzeichnet, dass** das erste Gehäuseelement (12) auf seiner Außenfläche (24) auf Höhe des Befestigungselements (46) einen Vorsprung (60) aufweist.

10. Brandschutzmanschettensegment nach einem der vorhergehenden Ansprüche, **dadurch gekennzeichnet, dass** das zweite Gehäuseelement (14) gegenüber der ersten Sollbiegekante (18) eine dritte Stirnwand (40) aufweist, die mit einer zweiten Blende (70) verbunden ist, wobei die zweite Blende (70) zumindest teilweise das Intumeszenzmaterial (56) auf der Anlagefläche (52) des zweiten Gehäuseelements (14) überdeckt, und wobei bevorzugt zwischen der dritten Stirnwand (40) und der zweiten Blende (70) eine dritte Sollbiegekante (68) vorgesehen ist.

11. Brandschutzmanschettensegment nach Anspruch 10, **dadurch gekennzeichnet, dass** auf die zweite Blende (70) zumindest auf ihrer der Anlagefläche (52) des zweiten Gehäuseelements (14) zugewandten Seite ein Intumeszenzmaterial (72) aufgebracht ist.

12. Brandschutzmanschettensegment nach einem der vorhergehenden Ansprüche, **dadurch gekennzeichnet, dass** das Intumeszenzmaterial (54, 56, 72) Blähgraphit umfasst oder aus diesem besteht.

13. Brandschutzmanschette, umfassend mehrere der Brandschutzmanschettensegmente (10) nach einem der vorhergehenden Ansprüche, **dadurch gekennzeichnet, dass** die Brandschutzmanschettensegmente (10) so zueinander angeordnet sind, dass das auf der Anlagefläche (50) des ersten Gehäuseelements (12) aufgebrachte Intumeszenzmaterial (54) vom zweiten Gehäuseelement (14') des jeweils benachbarten Brandschutzmanschettensegments (10') ganz oder teilweise verdeckt wird.

14. Brandschutzmanschette, umfassend mehrere der Brandschutzmanschettensegmente (10) nach einem der vorhergehenden Ansprüche, **dadurch gekennzeichnet, dass** die Brandschutzmanschettensegmente (10) in einem Abstand zueinander angeordnet sind, sodass zumindest ein Teil des auf der Anlagefläche (50) des ersten Gehäuseelements (12) aufgebrachten Intumeszenzmaterials (54) nicht vom zweiten Gehäuseelement (14') des jeweils benachbarten Brandschutzmanschettensegments (10') verdeckt wird.

15. Verwendung einer Brandschutzmanschette gemäß einem der Ansprüche 13 oder 14 zum Abdichten eines eine Öffnung (58) einer Wand oder Decke durchsetzenden brennbaren Körpers (64) im Brandfall, wobei die Brandschutzmanschette so um den brennbaren Körper (64) angeordnet ist, dass das Intumeszenzmaterial (52, 54) dem Körper (64) zugewandt und die jeweiligen Außenflächen (22, 24) der Begrenzungswände (20, 22) vom Körper abgewandt sind, und wobei zumindest abschnittsweise mehrere Lagen von Intumeszenzmaterial (52, 54) hintereinander angeordnet sind.
